# EUROPÄISCHE PATENTSCHRIFT

(11) **EP 0 510 767 B1**
(45) Veröffentlichungstag und Bekanntmachung des Hinweises auf die Patenterteilung: **21.01.1998**
(21) Anmeldenummer: 92201114.3
(22) Anmeldetag: 21.04.1992
(51) Int. Cl.: H04N 9/66, H04N 11/18

(54) **Schaltungsanordnung zum Demodulieren eines Farbsignals in einem Fernsehsignal**
Device for demodulating a colour signal into a television signal
Circuit pour la démodulation d'un signal de couleur en un signal de télévision

(30) Priorität: 26.04.1991 DE 4113646
(43) Veröffentlichungstag der Anmeldung: 28.10.1992
(73) Patentinhaber: Philips Patentverwaltung GmbH, 22335 Hamburg (DE); Philips Electronics N.V., 5621 BA Eindhoven (NL)
(72) Erfinder: Hildebrandt, Günter, W-2000 Hamburg 54 (DE); Wölber, Jörg, W-2080 Pinneberg (DE); Ernst, Holger, W-2000 Hamburg 60 (DE)
(74) Vertreter: Peters, Carl Heinrich, Dipl.-Ing.

(56) Entgegenhaltungen:
- EP-A- 0 040 272
- GB-A- 2 066 599

## Beschreibung

Die Erfindung bezieht sich auf eine Schaltungsanordnung zum Demodulieren eines wechselweise auf zwei Trägerschwingungen verschiedener Frequenzen modulierten Farbsignals in einem Fernsehsignal.

Aus der EP-A-40 272 ist ein Demodulator-System bekannt, das einen abstimmbaren Diskriminator enthält, der für den Gebrauch in einem SECAM-Fernsehempfänger angepaßt ist. Mit diesem Demodulator-System soll die als Farbdifferenzsignale R-Y bzw. B-Y übertragene Farbinformation aus den frequenzmodulierten SECAM-Hilfsträgern gewonnen werden. Das Demodulator-System enthält dazu einen einzelnen Diskriminator mit einer elektronisch einstellbaren Mittenfrequenz, einen Modulator zum Erzeugen einer mit den Farbsignalen amplituden-modulierten Referenzfrequenz, und einen Rückkopplungskreis, der zwischen dem Diskriminator und dem Modulator gekoppelt ist. Der Diskriminator wird selektiv auf eine Referenz-Mittenfrequenz während jeder Bildzeilen-Klemmperiode abgestimmt, um ein Nullpegel-Ausgangssignal zu erzeugen. Während des Farbinformationssignals jeder Zeile wird die Mittenfrequenz des Diskriminators abwechselnd durch erste und zweite Kontrollsignale auf Mittenfrequenzen geschoben, die mit den beiden Referenzfrequenzen übereinstimmen, um ein Ausgangssignal vom Pegel Null zu erzeugen, wenn die SECAM-Signale die jeweiligen Hilfsträgerfrequenzen annehmen.

Durch diese bekannte Schaltungsanordnung sollen präzise und stabil abgestimmte Kreise für die einzelnen Hilfsträgerfrequenzen eingespart werden.

Die bekannte Schaltungsanordnung enhält einen Klemmkondensator, in dem während einer Klemmperiode eine Spannung gespeichert wird, durch die Ausgangsströme eines Differenzverstärkers ausbalanciert werden entsprechend einem verschwindenden Ausgangssignal des Diskriminators bei dessen Abstimmung auf die Referenz-Mittenfrequenz. Damit wird der Arbeitspunkt des Differenzverstärkers bei der Referenz-Mittenfrequenz auf Null abgeglichen.

Bei der bekannten Schaltungsanordnung wird ferner vorausgesetzt, daß der Diskriminator eine lineare Charakteristik aufweist, so daß die Mittenfrequenz in linearer Weise gesteuert werden kann. Dies geschieht durch Zuführen einer Steuerspannung aus einem Steuersignalgenerator. Durch entsprechende Bemessung der Steuerspannungen wird dann der Diskriminator auf die Hilfsträgerfrequenzen für die Farbsignale eingestellt.

In der praktischen Ausführung einer derartigen Schaltungsanordnung zeigt sich jedoch, daß durch Fertigungstoleranzen und Nichtlinearitäten Streuungen auftreten, die zu unkontrollierten Abweichungen der Frequenzen, auf die der Diskriminator einzustellen ist, bzw. der dafür benötigten Steuerspannungen führen. Dadurch ist ein sauberer Nullabgleich für die Farbsignale nicht gewährleistet, und es treten im wiedergegebenen Fernsehbild Farbverschiebungen auf, die das für die Fernsehsignalverarbeitung zugelassene Maß überschreiten.

Aus der Druckschrift VALVO Technische Information 830919 ist ein Multistandard-Farbdecoder des Typs TDA 4550 bekannt, dessen Farbartsignal-Demodulatoren als Synchrondemodulatoren ausgebildet sind. Jedem dieser Synchrondemodulatoren wird an einem Referenzsignaleingang eine Referenzschwingung zugeführt, die durch sogenannte SECAM-Referenzkreise aus den Farbartsignalen ausgefiltert werden. Jeder der Referenzkreise ist auf eine der Hilfsträgerfrequenzen abgestimmt.

Mit einer derartigen Schaltungsanordnung ist zwar eine saubere Demodulation ohne Farbverschiebungen möglich, jedoch erfordert der Aufbau der Referenzkreise bei der Fertigung bzw. Inbetriebnahme einen Ableichvorgang. Außerdem bringt der Aufbau der Referenzkreise die Verwendung von Bauelementen mit sich, die sich nicht auf einem Halbleiterkörper integrieren lassen.

Aus der GB-A-2 066 599 ist ein Frequenz-Spannungs-Umsetzer bekannt, dessen Ausgangsspannung proportional dem Produkt der Eingangsfrequenz multipliziert mit einer Rückkopplungsspannung ist. Die Verstärkung dieses Frequenz-Spannungs-Umsetzers wird durch die Rückkopplungsspannung auf konstante Werte geregelt. Während eines ersten Zeitintervalls wird eine Referenzfrequenz einem Demodulator über einen ersten Schalter zugeführt, und die erzeugte Ausgangsspannung wird mit einer Referenzspannung in einem Komparator verglichen, um die rückgekoppelte Verstärkungssteuerspannung zu erzeugen, die in einem Kondensator gespeichert wird. Während eines zweiten Zeitintervalls wird die Eingangsfrequenz dem Demodulator zugeführt, und die Rückkopplungsschleife wird durch einen zweiten Schalter geöffnet. Die im Kondensator gespeicherte Spannung steuert dann die Verstärkung des Demodulators. Um zu vermeiden, daß der Demodulator aus seinem Fangbereich gerät, wird durch eine logische Schaltung ein weiterer Schalter geöffnet, wenn die Rückkopplungsspannung nicht die korrekte Polarität aufweist.

Die Erfindung hat die Aufgabe, eine Schaltungsanordnung zum Demodulieren eines Farbsignals der eingangs genannten Art zu schaffen, die einen einfachen, abgleichfreien und mit geringem Aufwand zu fertigenden Aufbau aufweist.

Diese Aufgabe wird erfindungsgemäß gelöst durch eine Schaltungsanordnung zum Demodulieren eines wechselweise auf zwei Trägerschwingungen verschiedener Frequenzen modulierten Farbsignals in einem Fernsehsignal, mit einer Demodulationseinrichtung, die eine in ihrer Mittenfrequenz wechselweise auf die Frequenz der Trägerschwingung des zu demodulierenden Farbsignals einstellbare Oszillatoranordnung umfaßt und der zum Abgleich der Werte der Mittenfrequenz in bestimmten ersten bzw. zweiten Zeitintervallen des Fernsehsignals, in denen kein Farbsignal übertragen wird, eine erste bzw. zweite Referenzschwingung mit einer ersten bzw. zweiten Frequenz zugeführt wird, sowie mit einer Referenzschwingungserzeugungsstufe zum wahlweisen Ableiten der ersten und zweiten Referenzschwingung aus einem gemeinsamen Frequenznormal.

Bei der erfindungsgemäßen Schaltungsanordnung wird die Demodulation der Farbsignale unter Zuhilfenahme eines Oszillators durchgeführt, dessen Schwingungen mit den modulierten Hilfsträgerschwingungen der empfangenen Farbsignale gemischt werden. Die Einstellung der Demodulationseinrichtung, die diese Oszillatoranordnung umfaßt, auf die jeweilige Mittenfrequenz zum Demodulieren der unterschiedlichen Hilfsträgerfrequenzen der verschiedenen Farbartsignale erfolgt dabei durch Einstellen der Ruhefrequenz der Oszillatoranordnung. Um eine exakte Einstellung der Oszillatoranordnung auf die jeweilige Frequenz der jeweiligen Trägerschwingung des zu demoulierenden Farbsignals zu erreichen, ist in bestimmten Zeitintervallen, die bevorzugt in die Austastlücken des Fernsehsignals fallen, ein Abgleich der Einstellung der Oszillatoranordnung auf die Werte der Mittenfrequenz bzw. der Ruhefrequenz vorgesehen. Dazu weist die erfindungsgemäße Schaltungsanordnung eine Referenzschwingungserzeugungsstufe auf, von der wahlweise die erste oder die zweite Referenzschwingung zum Abgleich der Oszillatoranordnung auf den ersten oder zweiten Wert der Mittenfrequenz entsprechend die Frequenzen der Trägerschwingungen abgeleitet werden. Diese Ableitung der ersten und zweiten Referenzschwingung erfolgt aus einem gemeinsamen Frequenznormal, wodurch einerseits ein wirtschaftlicher Schaltungsaufbau erhalten wird und andererseits unabhängig von Fertigungstoleranzen eine exakte Korrelation der Frequenzen der beiden Referenzschwingungen erzielt werden kann.

Mit der erfindungsgemäßen Schaltungsanordnung ist während des Betriebes ein vollautomatischer Abgleich möglich. Außerdem sind die dafür nötigen Schaltungselemente weitestgehend auf einem Halbleiterkörper integrierbar und ein besonderer Abgleich des Aufbaus bei der Fertigung ist nicht erforderlich. Die Erfindung ermöglicht somit eine einfache, kompakte und preiswerte Anordnung.

Bevorzugt umfaßt die Demodulationseinrichtung eine phasenverriegelte Schleife, deren gesteuerter Oszillator durch die einstellbare Oszillatoranordnung gebildet wird. Die phasenverriegelte Schleife bildet eine einfache und präzise arbeitende Einrichtung zur Frequenzdemodulation. Sie enthält weiterhin bevorzugt einen Phasendiskriminator, dem an einem ersten Eingang das Farbsignal und in den ersten bzw. zweiten Zeitintervallen wechselweise die erste bzw. zweite Referenzschwingung und dem an einem zweiten Eingang von der einstellbaren Oszillatoranordnung erzeugte Schwingungen zuführbar sind. An einem Ausgang des Phasendiskriminators ist ein Steuersignal zum Steuern der Frequenz der Schwingung der einstellbaren Oszillatoranordnung entnehmbar. Das Steuersignal bildet gleichzeitig das frequenzdemodulierte Farbsignal.

Nach einer bevorzugten Weiterbildung ist ferner eine Speicheranordnung mit je einem Speicherelement zu jeder Referenzschwingung vorgesehen, in dem während des Abgleichs der Werte der Mittenfrequenz der einstellbaren Oszillatoranordnung zugehörige Werte des Steuersignals abspeicherbar sind. Durch den Abgleich erfolgt somit eine laufend automatisch korrigierbare, alle Fehlerquellen wie Fertigungstoleranzen und Nichtlinearitäten kompensierende, exakte Einstellung der Oszillatoranordnung auf die für eine fehlerfreie Demodulation benötigten Mittenfrequenzen.

In vorteilhafter Weise sind jeweils ein erstes Zeitintervall für den Abgleich der Oszillatoranordnung in einer ersten und jeweils ein zweites Zeitintervall in einer auf diese folgenden zweiten Bildwechsel-Austastlücke des Fernsehsignals angeordnet. Der Abgleich der Mittenfrequenzen wird dann zyklisch in jeder zweiten Bildwechsel-Austastlücke wiederholt und dabei stets den aktuellen Betriebsbedingungen angepaßt. In den dazwischenliegenden Zeiträumen wird die Mittenfrequenz der Oszillatoranordnung auf den durch den jeweils letzten Abgleich für die jeweilige Trägerschwingung gehalten. Vorzugsweise liefern die Speicherelemente während dieser Zeiträume die benötigten Werte für das Steuersignal.

In einer anderen Fortbildung sind jeweils ein erstes und ein zweites Zeitintervall gemeinsam in einer Bildwechsel-Austastlücke des Fernsehsignals angeordnet. Bei der dadurch gegebenen Verfahrensweise erfolgt in jeder Bildwechsel-Austastlücke ein Abgleich für jede der Trägerschwingungen. Die durch die Speicherelemente zu überbrückenden Zeiträume betragen damit statt zweier nur noch einen zeitlichen Abstand zwischen zwei aufeinanderfolgenden Bildwechsel-Austastlücken. Insbesondere bei einem Aufbau als analoge Signalverarbeitungsschaltung mit einer analogen, phasenverriegelten Schleife und analogen Speicherelementen, bevorzugt Kondensatoren, kann dadurch eine verkleinerte Dimensionierung der Speicherelemente gewählt werden, was der Intergrierbarkeit der gesamten Schaltungsanordnung entgegenkommt. Die erfindungsgemäße Schaltungsanordnung ist jedoch auch als digitale Signalverarbeitungsschaltung mit einer digitalen, phasenverriegelten Schleife aufbaubar. Die Speicheranordnung wird dann als digitaler Speicher aufgebaut.

Die erfindungsgemäße Schaltungsanordnung eignet sich bevorzugt zur Demodulation eines Fernsehsignals, dessen Farbsignal nach der SECAM-Norm moduliert ist.

Durch die erfindungsgemäße Art der Demodulation des Farbsignals und des Abgleichs der Demodulationseinrichtung wird in besonders günstiger Weise eine sehr einfache Erzeugung der Referenzschwingungen für den Abgleich ermöglicht. Während bei dem aus der EP-OS 40 272 bekannten Demodulatorsystem eine exakte Einstellung des Diskriminators auf die erwünschten Trägerfequenzen erforderlich ist, genügt es bei der erfindungsgemäßen Schaltungsanordnung, daß die Frequenzen der Referenzschwingungen mit den Frequenzen der Trägerschwingungen weitgehend übereinstimmen und daß Abweichungen in den Frequenzwerten, die zu Abweichungen in den Werten des Steuersignals führen, durch Konstantsignalquellen ausgleichbar sind.

Durch diese Ausgestaltung der Erfindung ist es möglich, von einer exakten Angleichung der Frequenzen der Referenzschwingungen an diejenigen der Trägerschwingungen abzuweichen und diese Frequenzen vielmehr nur weitgehend anzunähern zugunsten einer wesentlich vereinfachten Ableitung der Referenzschwingungen. Dies ist insbesondere dann von Vorteil, wenn als Frequenznormal ein bereits im Gesamtaufbau, in dessen Rahmen die erfindungsgemäße Schaltungsanordnung eingesetzt werden soll, bereits vorhandenes Frequenznormal zum Ableiten der Referenzschwingungen herangezogen werden soll. Als solches Frequenznormal tritt bevorzugt ein Quarzoszillator auf, der auf die doppelte Frequenz der Farbträgerschwingung nach der PAL-Norm eingestellt ist. Für die Demodulation eines nach der SECAM-Norm modulierten Farbsignals kann dann aus diesem Frequenznormal die erste Referenzschwingung bevorzugt durch Frequenzhalbierung und die zweite Referenzschwingung durch eine Frequenzteilung im Verhältnis 23:24 mit anschließender Frequenzhalbierung abgeleitet werden. Es zeigt sich, daß die erfindungsgemäße Schaltungsanordnung auch mit einer Referenzschwingung noch einwandfrei arbeitet, die - bedingt durch die nicht ganzzahlige Frequenzteilung - Phasensprünge aufweist.

Insbesondere in einem Mehrnormen-Fernsehempfänger, in dem das beschriebene Frequenznormal ohnehin vorhanden ist, kann dann die Ableitung der Referenzschwingungen mit wenigen, sehr einfachen Signalverarbeitungsstufen ausgeführt werden, wodurch ein nur sehr geringer schaltungstechnischer Aufwand entsteht.

Die verbleibenden Abweichungen in den Frequenzwerten sind bei einer derartigen Schaltungsanordnung jedoch konstant, d.h. unabhängig von Schwankungen, Fertigungstoleranzen oder sonstigen Fehlern oder Abweichungen. Sie können daher in einfacher Weise durch Konstantsignalquellen ausgeglichen werden, ohne daß dadurch Ungenauigkeiten oder Fehler entstehen.

Ausführungsbeispiele der Erfindung sind in der Zeichnung dargestellt und werden im nachfolgenden näher beschrieben.
Es zeigen
Fig. 1 ein Beispiel für eine Schaltungsanordnung zum Ableiten der ersten und zweiten Referenzschwingung aus einem gemeinsamen Frequenznormal,
Fig. 2 ein Ausführungsbeispiel für eine Schaltungsanordnung zum Demodulieren eines Farbsignals gemäß der Erfindung.

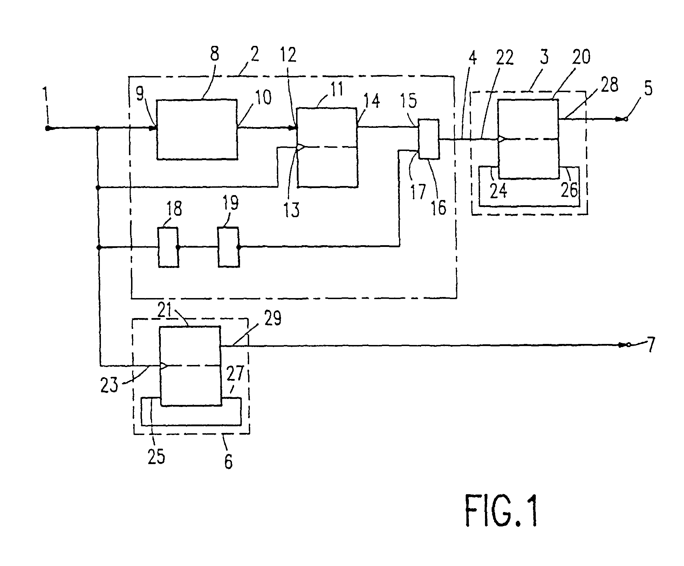

Die Anordnung nach Fig. 1 zeigt ein sehr einfaches Beispiel für die Ableitung zweier Referenzschwingungen aus der Schwingung eines gemeinsamen Frequenznormals, die einem Eingangsanschluß 1 zugeleitet wird. Die Anordnung nach Fig. 1 umfaßt eine erste Frequenzteilerstufe 2, in der die Schwingung vom Eingangsanschluß 1 im Verhältnis 23:24 herabgesetzt, d.h. durch 24/23 geteilt wird. In einer nachfolgenden, zweiten Frequenzteilerstufe 3 wird das am Ausgang 4 der ersten Frequenzteilerstufe 2 auftretende Signal noch einmal in der Frequenz halbiert. Am Ausgang 5 der zweiten Frequenzteilerstufe 3 steht somit ein Signal zur Verfügung, dessen Frequenz 23/48 der Frequenz der am Eingangsanschluß 1 zugeführten Schwingung beträgt.

Vom Eingangsanschluß 1 wird die dort anstehende Schwingung außerdem einer dritten Frequenzteilerstufe 6 zugeleitet, die wie die zweite Frequenzteilerstufe 3 das ihr zugeführte Signal in seiner Frequenz halbiert und in dieser Form an einem Ausgang 7 zur Verfügung stellt.

Im vorliegenden Beispiel umfaßt die erste Frequenzteilerstufe 2 einen Teiler 8, dem an seinem Eingang 9 die Schwingung vom Eingangsanschluß 1 her zugeführt wird. Der Teiler 8 gibt an seinem Ausgang 10 eine Schwingung ab, deren Frequenz einem 24tel der Frequenz der Schwingung am Eingang 9 entspricht. Derartige Teiler, die die Frequenz eines zugeführten Signals durch einen ganzzahligen Divisor teilen, sind mit Zählern oder bistabilen Kippschaltungen einfach aufbaubar. Beispielsweise kann der Teiler 8 einen Zähler enthalten, der die Schwingungszüge bzw. Impulse der am Eingangsanschluß 1 zugeführten Schwingung zählt und nach jedem 12. Impuls bzw. Schwingungszug durch ein impuslförmiges Ausgangssignal ein nachgeschaltetes D-Flipflop in dessen jeweils anderen Zustand umschaltet.

Um ein bezüglich der signalflanken der Schwingung am Eingangsanschluß 1 phasengenaues Signal mit durch 24 geteilter Frequenz zu erhalten, ist dem Teiler 8 ein D-Flipflop 11 nachgeschaltet. Dessen D-Eingang 12 ist mit dem Ausgang 10 des Teilers 8 verbunden, während dem Takteingang 13 des D-Flipflops 11 die Schwingung vom Eingangsanschluß 1 zugeleitet wird. Am Ausgang 14 des D-Flipflops 11 erscheint dann eine gegenüber der Schwingung vom Eingangsanschluß 1 in ihrer Frequenz um den Divisor 24 geteilte Schwingung, deren Signalflanken bis auf Signallaufzeiten im D-Flipflop 11 und ggf. im Teiler 8 mit den Signalflanken der Schwingung am Eingangsanschluß 1 zusammenfallen.

Die Schwingung vom Ausgang 14 des D-Flipflops 11 wird einem ersten Eingang 15 einer Äquivalenzschaltung 16 zugeführt, deren zweitem Eingang 17 die Schwingung vom Eingangsanschluß 1 zugeleitet wird. In die Verbindung zwischen dem Eingangsanschluß 1 und dem zweiten Eingang 17 der Äquivalenzschaltung 16 sind zwei Laufzeitausgleichsgatter 18, 19 eingefügt, um auch an den Eingängen 15, 17 der Äquivalenzschaltung 16 ein exaktes zeitliches Zusammenfallen der Signalflanken zu erhalten.

Die Aquivalenzschaltung 16, auch als Exclusiv-NOR-Schaltung bezeichnet, liefert an ihrem Ausgang, der den Ausgang 4 der ersten Frequenzteilerstufe 2 bildet, einen hohen Signalwert, wenn die Signalwerte an den Eingängen 15, 17 miteinander übereinstimmen; bei unterschiedlichen Signalwerten an den Eingängen 15, 17 liefert die Aquivalenzschaltung 16 an den Ausgang 4 ein Signal mit niedrigem Signalwert.

Beim Betrieb der ersten Frequenzteilerstufe 2 wird somit das Signal vom Eingangsanschluß 1 durch die Laufzeiten der Laufzeitausgleichsgatter 18, 19 und der Äquivalenzschaltung 16 verzögert, aber im übrigen unverändert am Ausgang 4 abgegeben. Dies gilt solange, wie sich das dem ersten Eingang 15 der Aquivalenzschaltung 16 zugeführte Signal in seinem Wert nicht ändert. Mit jeder Signalflanke am ersten Eingang 15 der Äquivalenzschaltung 16 bewirkt diese jedoch einen Phasensprung des Signals am Ausgang 4 um 180°. Ein solcher Phasensprung tritt nach jeweils 12 Perioden der Schwingung am Eingangsanschluß 1 auf und bewirkt im Mittel eine Verringerung der Frequenz dieser Schwingung um 1/24. Durch die dem Ausgang 4 nachgeschaltete zweite Frequenzteilerstufe 3 wird die Frequenz der Schwingung am Ausgang 4 noch einmal halbiert; die beschriebenen Phasensprünge betragen dann jeweils noch 90° und treten nach jeder sechsten Schwingungsperiode auf.

Die zweite und dritte Frequenzteilerstufe 3, 6 weisen einen identischen Aufbau auf mit je einem D-Flipflop 20 bzw. 21, dessen Takteingang 22 bzw. 23 den Eingang der Frequenzteilerstufe 3 bzw. 6 bildet. Die D-Eingänge 24 bzw. 25 der D-Flipflops 20 bzw. 21 sind mit invertierenden Ausgängen 26 bzw. 27 der D-Flipflops 20 bzw. 21 verbunden, wogegen nichtinvertierende Ausgänge 28 bzw. 29 der D-Flipflops 20 bzw. 21 die Ausgänge 5 bzw. 7 der Frequenzteilerstufen 3 bzw. 6 bilden.

Das Schaltungsbeispiel nach Fig. 1 ist insbesondere geeignet zum Ableiten zweier Referenzschwingungen, deren Frequenzen weitgehend mit den Frequenzen der Trägerschwingungen eines nach der SECAM-Norm modulierten Farbsignals übereinstimmen, aus einem als gemeinsames Frequenznormal dienenden Quarzoszillator, der auf dem Doppelten der Frequenz der Farbträgerschwingung nach der PAL-Norm schwingt. Die Frequenz dieser Farbträgerschwingung nach der PAL-Norm beträgt exakt 4,43361875 MHz. Durch diese Frequenz wird mit der Schaltung gemäß Fig. 1 die für die SECAM-Norm festgelegte Frequenz der Trägerschwingung des roten Farbsignals mit 4,40625 MHz angenähert. Entsprechend wird durch die Schwingung am Ausgang 5 mit der Frequenz 4,248884635 MHz die genormte Trägerfrequenz für das blaue Farbartsignal von 4,250 MHz angenähert.

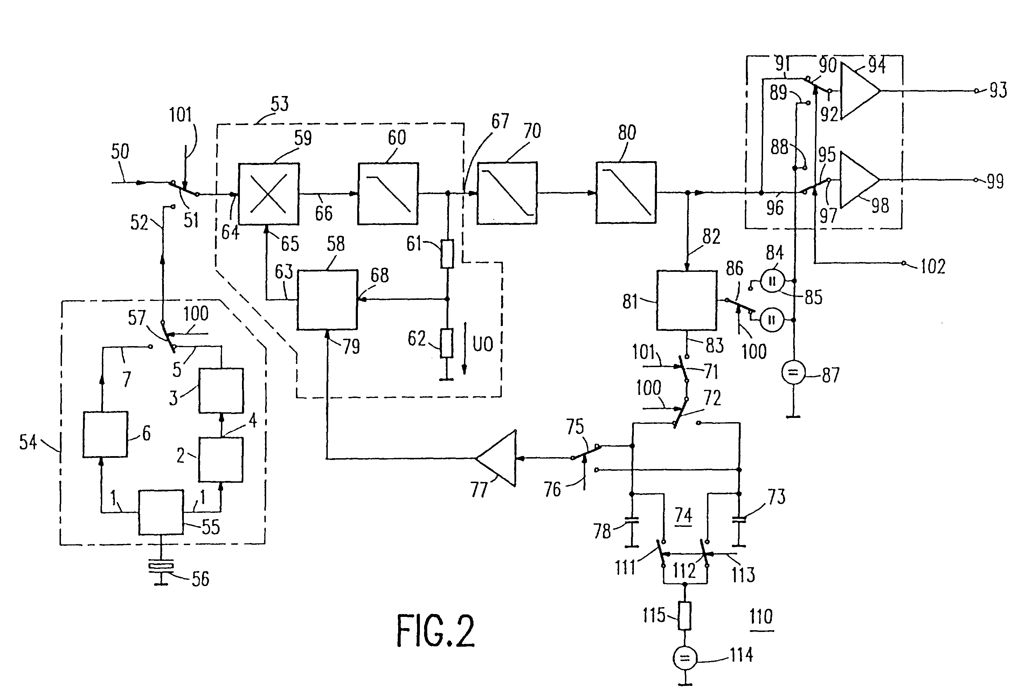

Fig. 2 zeigt in blockschematischer Darstellung ein Beispiel für eine Schaltungsanordnung zum Demodulieren vorzugsweise eines nach der SECAM-Norm modulierten Farbsignals. Dieses wird über einen Farbsignaleingang 50 einem Signalquellenumschalter 51 zugeführt. Einem Referenzschwingungseingang 52 des Signalquellenumschalters 51 ist eine Referenzschwingung zum Abgleich einer dem Signalquellenumschalter 51 nachgeschalteten Demodulationseinrichtung 53 zuführbar. Der Referenzschwingungseingang 52 des Signalquellenumschalters 51 ist mit einer Referenzschwingungserzeugungsstufe 54 verbunden, deren wesentliche Elemente in Fig. 1 dargestellt und dazu bereits beschrieben sind. Diese Elemente sind in Fig. 2 wieder mit denselben Bezugszeichen versehen. Die Referenzschwingungserzeugungsstufe 54 enthält einen Referenzoszillator 55, der durch einen als Frequenznormal dienenden Schwingquarz 56 stabilisiert ist. In dem oben beschriebenen Beispiel liefert der Referenzoszillator 55 eine Schwingung mit der doppelten Frequenz der Farbträgerschwingung nach der PAL-Norm, d.h. eine Schwingung mit einer Frequenz von 8,8672375 MHz. Beispielsweise bei einem Einsatz der beschriebenen Schaltungsanordnung in einem Mehrnormen-Fernsehempfänger kann der Referenzoszillator 55 für die Verarbeitung sowohl eines nach der PAL-Norm als auch eines nach der SECAM-Norm modulierten Farbsignals verwendet werden, wobei lediglich ein einziger Schwingquarz 56 eingesetzt werden muß. Eine derartige Schaltungsanordnung ist daher besonders kostengünstig und einfach aufgebaut.

In der Einsatzform der Referenzschwingungserzeugungsstufe 54 mit den Baugruppen gemäß Fig. 1 ist der Eingangsanschluß 1 zum Zuführen der Schwingung vom Referenzoszillator 55 an die erste bzw. dritte Frequenzteilerstufe 2 bzw. 6 in Form zweier getrennter Leitungen dargestellt. Auf beiden dieser Leitungen wird beim vorliegenden Beispiel jedoch dieselbe Schwingung übertragen.

Die Ausgänge 5 und 7 der zweiten bzw. dritten Frequenzteilerstufe 3 bzw. 6 bilden in der Referenzschwingungserzeugungsstufe 54 Eingangsanschlüsse eines Referenzsignalumschalters 57, dessen Ausgang zugleich der Referenzschwingungseingang 52 des Signalquellenumschalters 51 ist.

Die Demodulationseinrichtung 53 umfaßt eine phasenverriegelte Schleife mit einem gesteuerten Oszillator 58, einem Phasendiskriminator 59, einem Schleifenfilter 60 und einem Spannungsteiler aus zwei Widerständen 61, 62. Der Oszillator 58 bildet die durch die Referenzschwingungen von der Referenzschwingungserzeugungsstufe 54 abzugleichende einstellbare Oszillatoranordnung. Eine vom Oszillator 58 an dessen Ausgang 63 abgegebene Schwingung wird einem zweiten Eingang 65 des Phasendiskriminators 59 zugeführt, während einem ersten Eingang 64 des Phasendiskriminators 59 das Farbsignal vom Farbsignaleingang 50 oder die Referenzschwingungen vom Referenzschwingungseingang 52 über den Signalquellenumschalter 51 zugeleitet werden. Die Signale von den Eingängen 64 und 65 werden im Phasendiskriminator 59 in an sich bekannter Weise gemischt, so daß am Ausgang 66 des Phasendiskriminators 59 ein dem Phasenunterschied zwischen den Signalen an den Eingängen 64, 65 entsprechendes Signal auftritt. Dieses wird in dem dem Ausgang 66 nachgeschalteten, das Regelverhalten bestimmenden Schleifenfilter 60 bedämpft und gerinfügig von Oberwellen befreit und einerseits dem Spannungsteiler 61, 62 zugeführt, andererseits an einem Ausgang 67 der Demodulationseinrichtung 53 als frequenzdemoduliertes Farbsignal zur Verfügung gestellt. Über den Spannungsteiler 61, 62 gelangt es als Steuersignal an einen Steuereingang 68 des gesteuerten Oszillators 58, der beispielsweise als VCO aufgebaut sein kann, zum Steuern der Frequenz der Schwingung des Oszillators 58.

Das von der Demodulationseinrichtung 53 an ihrem Ausgang 67 abgegebene frequenzdemodulierte Farbsignal gelangt über eine Deemphasisstufe 70 zur Einführung der durch die SECAM-Norm vorgegebenen Deemphase und ein nachgeschaltetes Tiefpaßfilter 80 an erste Eingangsanschlüsse 91, 96 zweier Austastschalter 90, 95 und über deren Ausgangsanschlüsse 92, 97 und nachgeschaltete Ausgangsverstärker 94 bzw. 98 an Ausgangsanschlüsse 93 bzw. 99 für das rote bzw. blaue Farbartsignal gemäß der SECAM-Norm. Auf diesem Wege werden die Farbartsignale während der einzelnen Zeilen des Fernsehsignals übertragen. In den Austastlücken zwischen den einzelnen Zeilen und Bildern des Fernsehsignals werden die Austastschalter 90, 95 derart umgeschaltet, daß ihre Ausgangsanschlüsse 92 bzw. 97 mit zweiten Eingangsanschlüssen 89 bzw. 88 verbunden sind und über diese eine gemeinsame Referenzspannung als Austastpegel oder Unbuntpegel von einer Austastpegelquelle 87 an die Ausgangsanschlüsse 93 bzw. 99 übertragen wird. Die beiden Farbartsignale an den Ausgangsanschlüssen 93, 99 werden bei dem vorliegenden Schaltungsbeispiel somit auf denselben Austastpegel bezogen.

Bei einem nach der SECAM-Norm modulierten Farbsignal werden am Beginn jeder Zeile des Fernsehbildes in den dortigen, sogenannten Schwarzschultern des Fernsehsignals vom Sender Referenzfrequenzen übertragen, die ein Maß für den Austast- bzw. Unbuntpegel der Farbsignale darstellen sollen. Da sich jedoch gezeigt hat, daß diese Referenzfrequenzen für eine fehlerfreie Farbwiedergabe des Fernsehsignals nicht genau genug sind, wird von der Schaltungsanordnung gemäß Fig. 2 ein automatischer, interner Abgleich der Oszillatorfrequenzen bzw. Gleichspannungspegel für den Austast- bzw. Unbuntpegel durchgeführt. Dieser Abgleich zwischen den Trägerschwingungen für die Farbartsignale und den Referenzschwingungen von der Referenzschwingungserzeugungsstufe wird vorzugsweise in jeder Bildwechsel-Austastlücke des Fernsehsignals in dafür vorgesehenen Zeitintervallen vorgenommen. Beispielsweise ist in einer ersten Bildwechsel-Austastlücke ein erstes Zeitintervall für den Abgleich für das rote Farbartsignal, in einer zweiten Bildwechsel-Austastlücke nach Ablauf eines Fernsehbildes nach der ersten Bildwechsel-Austastlücke ein zweites Zeitintervall, nach einem weiteren Fernsehbild in der darauffolgenden Bildwechsel-Austastlücke wieder ein (nächstes) erstes Zeitintervall für den Abgleich für das rote Farbartsignal, nach einem weiteren Fernsehbild wieder ein zweites Zeitintervall für den Abgeich für das blaue Farbartsignal, usw. vorgesehen. Das erste und das zweite Zeitintervall können jedoch auch in einer einzigen Bildwechsel-Austastlücke unmittelbar nacheinander angeordnet sein, so daß beide Abgleichvorgänge in jeder Bildwechsel-Austastlücke wiederholt werden.

In den Bildwechsel-Austastlücken wird der Signalquellenumschalter 51 von der in Fig. 2 gezeigten Stellung in diejenige Stellung umgeschaltet, in der sein Referenzschwingungseingang 52 mit dem ersten Eingang 64 des Phasendiskriminators 59 verbunden ist. Während des ersten Zeitintervalls zum Abgleich für das rote Farbartsignal befindet sich dann der Referenzsignalumschalter 57 - gesteuert durch ein Schaltsignal auf seinem Schaltsignaleingang 100 - in der nicht gezeigten Stellung, in der der Ausgang 7 der dritten Frequenzteilerstufe 6 mit dem Referenzschwingungseingang 52 verbunden wird. Im ersten Zeitintervall wird somit die erste Referenzschwingung an den ersten Eingang 64 des Phasendiskriminators 59 übertragen. Das sich dabei am Ausgang 67 der Demodulationseinrichtung 53 einstellende Signal wird über die Deemphasisstufe 70 und das Tiefpaßfilter 80 einem Spannungs-Strom-Umsetzer 81 zugeleitet. Dieser formt aus der ihm an seinem Eingang 82 zugeführten Signalspannung einen an seinem Ausgang 83 abgegebenen Ladestrom, der über einen Referenz-Austastschalter 71 und einen Speicherumschalter 72 einem ersten Speicherelement 73 einer Speicheranordnung 74 zugeleitet wird. Der Speicherumschalter 72 befindet sich - gesteuert ebenfalls über den Schaltsignaleingang 100 - im ersten Zeitintervall in der nicht dargestellten Position. Über einen Steuersignalumschalter 75, der mittels seines Schaltsignaleingangs 76 im ersten Zeitintervall ebenfalls in die nicht dargestellte Position überführt ist, wird die im ersten Speicherelement 73 gespeicherte Spannung als Steuersignal über einen Steuersignalverstärker 77 einem Steuersignaleingang 79 des gesteuerten Oszillators 58 zugeleitet. Während des ersten Zeitintervalls bzw. der ersten Zeitintervalle wird so die Ruhefrequenz des gesteuerten Oszillators 58 über die aus dem Schleifenfilter 60, der Deemphasisstufe 70, dem Tiefpaßfilter 80, dem Spannungs-Strom-Umsetzer 81 und dem Steuersignalverstärker 77 gebildete Schleife eingestellt. Der für eine korrekte Einstellung dieser Ruhefrequenz sich ergebende Wert des Steuersignals wird im ersten Speicherelement 73 für die nachfolgende Verarbeitung jeweils des roten Farbartsignals abgespeichert.

Bei der beschriebenen Schaltungsanordnung stellt sich am Widerstand 62 des Spannungsteilers ein konstanter Spannungswert U0 ein, der durch eine interne Spannungsquelle innerhalb des gesteuerten Oszillators 58 vorgegeben ist. Der Oszillator 58 wird somit durch einen Strom, der aus dem Steuereingang 68 für das Steuersignal herausfließt (positive Stromrichtung im vorgegebenen Beispiel), gesteuert. Verschwindet die Spannung über dem Widerstand 61 des Spannungsteilers, fließt darin kein Strom, so daß am Steuereingang 68 nur ein durch die Spannung U0 und den Widerstandswert des Widerstands 62 bestimmter Ruhestrom fließt, der für die Ruhefrequenz des Oszillators 58 bestimmend ist. Korrekte Unbuntwerte werden dadurch erhalten, daß die Spannung U0 und die von der Austastpegelquelle 87 als Austast- bzw. Unbuntpegel abgegebene Spannung übereinstimmend gewählt werden.

In den zweiten Zeitintervallen werden der Referenzsignalumschalter 57 und der Speicherumschalter 72 über den Schaltsignaleingang 100 sowie der Steuersignalumschalter 75 über den Schaltsignaleingang 76 in die in Fig. 2 dargestellten Positionen gebracht, in denen ein Abgleich für das blaue Farbartsignal durchgeführt wird. In der Speicheranordnung 74 ist dann an die im übrigen unveränderte Schleife aus den Elementen 60, 70, 80, 81, 77 anstelle des ersten Speicherelements 73 ein zweites Speicherelement 78 angeschlossen, in dem ein entsprechender Wert des Steuersignals für den Abgleich für das blaue Farbartsignal gespeichert wird. Dem ersten Eingang des Phasendiskriminators 59 und damit der Demodulationseinrichtung 53 wird in den zweiten Zeitintervallen von der Referenzschwingungserzeugungsstufe 54 die zweite Referenzschwingung zugeführt, die in der vorbeschriebenen Weise aus dem Referenzoszillator 55 über die erste und zweite Frequenzteilerstufe 2 bzw. 3 abgeleitet und am Ausgang 5 zur Verfügung gestellt wird. Entsprechend dem Abgleich der Demodulationseinrichtung 53 und der in ihr enthaltenen einstellbaren Oszillatoranordnung 58 auf die erste Referenzschwingung während der ersten Zeitintervalle erfolgt in den zweiten Zeitintervallen ein Abgleich auf die zweite Referenzschwingung.

In dem beschriebenen Beispiel entsprechen die an den Ausgängen 5, 7 bereitgestellten Referenzschwingungen in ihren Frequenzen nicht exakt den durch die SECAM-Norm vorgegebenen Trägerfrequenzen für das rote bzw. blaue Farbartsignal, sondern stellen vielmehr Annäherungen an diese Frequenzen dar, die sich einfach aus dem Doppelten der Frequenz der Farbträgerschwingung nach der PAL-Norm ableiten lassen. Demzufolge wird auch der Abgleich auf diese geringfügig abweichenden, jedoch sehr stabil erzeugten Frequenzen erfolgen. Damit werden die erforderlichen Unbunt- bzw. Austastwerte nicht exakt getroffen, jedoch liegen sie um geringe, sehr konstante Beträge neben den anzustrebenden Unbuntwerten. Diese Abweichungen werden durch zwei Korrekturquellen 84, 85 ausgeglichen, die auf entsprechend den Frequenzabweichungen festliegende, konstante Spannungspegel eingestellt sind. Durch einen Korrekturquellenumschalter 86, der ebenfalls über den Schaltsignaleingang 100 umgeschaltet wird, werden die konstanten Spannungspegel der Korrekturquellen 84 bzw. 85 während der ersten bzw. zweiten Zeitintervalle als Korrektursignale dem Spannungs-Strom-Umsetzer 80 zugeführt. Dadurch kann bei der Umsetzung der Signalspannung am Eingang 82 in den Ladestrom am Ausgang 83 ein entsprechender, konstanter Pegel berücksichtigt werden, so daß insgesamt ein korrekter Wert für das Steuersignal in der Speicheranordnung 74 gespeichert und anschließend bei der Demodulation der Farbsignale darin ein korrekter Unbuntpegel erhalten wird.

In einer Abwandlung der Schaltungsanordnung nach Fig. 2 können die Korrekturquellen 84 bzw. 85 mit den zweiten Eingangsanschlüssen 89 bzw. 88 der Austastschalter 90 bzw. 95 für das rote bzw. blaue Farbartsignal verbunden werden. Die Korrektur erfolgt dann nicht in den Steuersignalen, sondern unmittelbar in den Farbartsignalen. Diese weisen jedoch unterschiedliche Austast-Unbuntpegel auf.

In jedem Fall wird jedoch die Austastpegelquelle 87 den von ihr gelieferten Austast- bzw. Unbuntpegel sowohl an die Ausgangsanschlüsse 93 bzw. 99 als auch - für die Einstellung korrekter Steuersignalwerte - an den Spannungs-Strom-Umsetzer 81 liefern. In Fig. 2 erfolgt dies über die Korrekturquellen 84, 85, im nicht dargestellten Abwandlungsbeispiel ist eine unmittelbare Verbindung hergestellt. In dieser Abwandlung entfällt im übrigen der Korrekturquellenumschalter 86.

Der Signalquellenumschalter 51 und der Referenz-Austastschalter 71 werden gemeinsam über einen Schaltsignaleingang 101 geschaltet, durch den die Schleife für den Abgleich außerhalb der ersten und zweiten Zeitintervalle unterbrochen wird. Der Steuersignalumschalter 75 wird über seinen Schaltsignaleingang 76 außerhalb der ersten und zweiten Zeitintervalle, d.h. während der Übertragung der Farbartsignale, gemäß der SECAM-Norm zeilenweise umgeschaltet, so daß für die Demodulation der Farbartsignale in jeder Zeile der gesteuerte Oszillator 58 auf die der Frequenz der zugehörigen Trägerschwingung entsprechende Ruhefrequenz geschaltet wird. Die Austastschalter 90, 95 werden über einen Schaltsignaleingang 102 entsprechend der Zufuhr der demodulierten Farbartsignale bzw. der Austastpegel an die Ausgangsanschlüsse 93 bzw. 99 unabhängig voneinander derart gesteuert, daß die Farbartsignale der einzelnen Farbkomponenten den richtigen Ausgangsanschlüssen 93 bzs. 99 zugeleitet werden.

Die Speicheranordnung 74 ist im Ausführungsbeispiel nach Fig. 2 zusätzlich mit einer Anlauf-Ladeschaltung 110 versehen. Diese ist lediglich bei Inbetriebnahme der Schaltungsanordnung nach Fig. 2 wirksam. Durch einen Startimpuls werden dann zwei Schalter 111, 112 über einen Schalteingang 113 kurzzeitig in ihren leitenden Zustand überführt. Eine Gleichspannungsquelle 114 mit einem nachgeschalteten Ladewiderstand 115 liefert dann einen Stromimpuls, durch den die Speicherelemente 73, 78 auf einen Spannungswert aufgeladen werden, der wenigstens weitgehend den durch die Abgleichvorgänge erzielten Werten der Steuersignale, vorzugsweise deren Nominal- oder Mittelwerten, entspricht. Dadurch erfolgt bei Inbetriebnahme der Schaltungsanordnung eine Voreinstellung des gesteuerten Oszillators 58, durch die ein schnelles und fehlerfreies Einschwingen des Oszillators 58 auf den richtigen Frequenzen gewährleistet wird.

Bei der vorstehend beschriebenen Schaltungsanordnung wird für die Unbuntfrequenzen vorteilhaft eine Phasenverschiebung von 90° am Phasendiskriminator 59 erhalten. Das vom Phasendiskriminator 59 gelieferte Steuersignal bzw. frequenzdemodulierte Farbsignal ist dann unabhängig von der Amplitude der Farbsignale am Farbsignaleingang 50. Somit wird auch bei schlechten Empfangsbedingungen für das Fernsehsignal am Ausgang 67 der Demodulationseinrichtung 53 ein stabiler Unbuntpegel erhalten.

## Patentansprüche

1. Schaltungsanordnung zum Demodulieren eines wechselweise auf zwei Trägerschwingungen verschiedener Frequenzen modulierten Farbsignals in einem Fernsehsignal, mit einer Demodulationseinrichtung (53), die eine in ihrer Mittenfrequenz wechselweise auf die Frequenz der Trägerschwingung des zu demodulierenden Farbsignals einstellbare Oszillatoranordnung (58) umfaßt und der zum Abgleich der Werte der Mittenfrequenz in bestimmten ersten bzw. zweiten Zeitintervallen des Fernsehsignals, in denen kein Farbsignal übertragen wird, eine erste bzw. zweite Referenzschwingung mit einer ersten bzw. zweiten Frequenz zugeführt wird, sowie mit einer Referenzschwingungserzeugungsstufe (54) zum wahlweisen Ableiten der ersten und zweiten Referenzschwingung aus einem gemeinsamen Frequenznormal (55, 56).

2. Schaltungsanordnung nach Anspruch 1,
dadurch gekennzeichnet, daß die Demodulationseinrichtung (53) eine phasenverriegelte Schleife umfaßt, deren gesteuerter Oszillator durch die einstellbare Oszillatoranordnung (58) gebildet wird.

3. Schaltungsanordnung nach Anspruch 2,
dadurch gekennzeichnet, daß die phasenverriegelte Schleife einen
Phasendiskriminator (59) umfaßt, dem an einem ersten Eingang (64) das Farbsignal und in den ersten bzw. zweiten Zeitintervallen wechselweise die erste bzw. zweite Referenzschwingung und dem an einem zweiten Eingang (65) von der einstellbaren Oszillatoranordnung (58) erzeugte Schwingungen zuführbar sind und dessen Ausgang (66) ein Steuersignal zum Steuern der Frequenz der Schwingung der einstellbaren Oszillatoranordnung (58) entnehmbar ist.

4. Schaltungsanordnung nach Anspruch 1, 2 oder 3,
gekennzeichnet durch eine Speicheranordnung (74) mit je einem Speicherelement (73, 78) zu jeder Referenzschwingung, in dem während des Abgleichs der Werte der Mittenfrequenz der einstellbaren Oszillatoranordnung zugehörige Werte des Steuersignals abspeicherbar sind.

5. Schaltungsanordnung nach Anspruch 1, 2, 3 oder 4,
dadurch gekennzeichnet, daß jeweils ein erstes Zeitintervall in einer ersten und jeweils ein zweites Zeitintervall in einer auf diese folgenden zweiten Bildwechsel-Austastlücke des Fernsehsignals angeordnet sind.

6. Schaltungsanordnung nach Anspruch 1, 2, 3 oder 4,
dadurch gekennzeichnet, daß jeweils ein erstes und ein zweites Zeitintervall gemeinsam in einer Bildwechsel-Austastlücke des Fernsehsignals angeordnet sind.

7. Schaltungsanordnung nach einem der vorhergehenden Ansprüche,
dadurch gekennzeichnet, daß das Farbsignal nach der SECAM-Norm moduliert ist.

8. Schaltungsanordnung nach Anspruch 3 oder 4, nach den Ansprüchen 5 oder 6 in Verbindung mit den Ansprüchen 3 oder 4 oder nach Anspruch 7 in Verbindung mit einem der Ansprüche 3 bis 6,
dadurch gekennzeichnet, daß die Frequenzen der Referenzschwingungen mit den Frequenzen der Trägerschwingungen weitgehend übereinstimmen und daß Abweichungen in den Frequenzwerten, die zu Abweichungen in den Werten des Steuersignals führen, durch Konstantsignalquellen (84, 85) ausgleichbar sind.

9. Schaltungsanordnung nach Anspruch 8 in Verbindung mit Anspruch 7,
dadurch gekennzeichnet, daß als Frequenznormal (55, 56) ein auf die doppelte Frequenz der PAL-Farbträgerschwingung eingestellter Quarzoszillator dient und daß die erste Referenzschwingung daraus durch Frequenzhalbierung und die zweite Referenzschwingung durch eine Frequenzteilung im Verhältnis 23:24 mit anschließender Frequenzhalbierung abgeleitet wird.

## Claims

1. A circuit arrangement for demodulating a chrominance signal, which is alternately modulated on two subcarriers of different frequencies, into a television signal, with a demodulation device (53) comprising an oscillator arrangement (58) whose centre frequency is alternately adjustable to the subcarrier frequency of the chrominance signal to be demodulated, which demodulation device receives a first or a second reference oscillation having a first or a second frequency for adjusting the centre frequency values in given first and second television signal time intervals, respectively, in which no chrominance signal is transmitted, and with a reference oscillation generation stage (54) for optionally deriving the first and the second reference frequencies from a common, standard frequency generator (55, 56).

2. A circuit arrangement as claimed in claim 1, characterized in that the demodulation device (53) comprises a phase-locked loop whose controlled oscillator is constituted by the adjustable oscillator arrangement (58).

3. A circuit arrangement as claimed in claim 2, characterized in that the phase-locked loop includes a phase discriminator (59) having a first input (64) which is coupled to receive the chrominance signal and alternately the first and the second reference frequencies in the first and second time intervals, respectively, and a second input (65) which is coupled to receive frequencies generated by the adjustable oscillator arrangement (58), and having an output (66) for supplying a control signal for controlling the frequency of the adjustable oscillator arrangement (58).

4. A circuit arrangement as claimed in claim 1, 2 or 3, characterized by a memory arrangement (74) with a memory element (73, 78) for each reference frequency, in which element associated values of the control signal can be stored during setting of the centre frequency values of the adjustable oscillator arrangement.

5. A circuit arrangement as claimed in claim 1, 2, 3 or 4, characterized in that a first time interval is provided in a first field blanking interval of the television signal and a second time interval is provided in a subsequent, second field blanking interval of said television signal.

6. A circuit arrangement as claimed in Claim 1, 2, 3 or 4, characterized in that a first and a second time interval are provided in common in one field blanking interval of the television signal.

7. A circuit arrangement as claimed in any one of the preceding claims, characterized in that the chrominance signal is modulated in accordance with the SECAM standard.

8. A circuit arrangement as claimed in claim 3 or 4, as claimed in claim 5 or 6 where appendant to claim 3 or 4, or as claimed in claim 7 where appendant to any one of claims 3 to 6, characterized in that the reference frequencies substantially correspond to the subcarrier frequencies and in that deviations of the frequency values which lead to deviations of the control signal values can be compensated for by constant signal sources (84, 85).

9. A circuit arrangement as claimed in claim 8 where appendant to claim 7, characterized in that a quartz oscillator adjusted to twice the PAL chrominance subcarrier frequency is used as a standard frequency generator (55, 56) and in that the first reference frequency is derived therefrom by frequency halving and the second reference frequency is derived therefrom by frequency division in the ratio of 23:24, followed by a frequency halving.

## Revendications

1. Circuit de démodulation d'un signal couleur modulé en alternance sur deux ondes porteuses de différentes fréquences en un signal de télévision avec un dispositif de démodulation (53) qui comprend un dispositif d'oscillateur (58) réglable en alternance dans sa fréquence centrale à la fréquence de l'onde porteuse du signal couleur à démoduler et auquel sont amenées pour la compensation des valeurs de la fréquence centrale dans des premiers ou deuxièmes intervalles temporels déterminés du signal de télévision dans lesquels aucun signal couleur n'est transmis des première ou deuxième oscillations de référence avec une première ou deuxième fréquence ainsi qu'avec un niveau de production d'une oscillation de référence (54) pour la dérivation au choix des première et deuxième oscillations de référence à partir d'une fréquence étalon commune (55, 56).

2. Circuit selon la revendication 1, caractérisé en ce que le dispositif de démodulation (53) comprend une boucle à verrouillage de phase dont l'oscillateur commandé est formé par le dispositif d'oscillateur (58) réglable.

3. Circuit selon la revendication 2, caractérisé en ce que la boucle à verrouillage de phase comprend un discriminateur de phase (59) auquel peuvent être amenés à une première entrée (64) le signal couleur et en alternance, dans les premiers et deuxièmes intervalles temporels, la première ou deuxième oscillation de référence et les oscillations produites par le dispositif d'oscillateur (58) réglable à une deuxième entrée (65) et à la sortie duquel (66) peut être prélevé un signal de commande pour la commande de la fréquence de l'oscillation du dispositif d'oscillateur (58) réglable.

4. Circuit selon l'une des revendications 1, 2 ou 3, caractérisé par un dispositif de mémoire (74) avec respectivement un élément de mémoire (73, 78) à chaque oscillation de référence dans lequel, pendant la compensation des valeurs de la fréquence centrale du dispositif d'oscillateur réglable, des valeurs correspondantes du signal de commande peuvent être enregistrées.

5. Circuit selon l'une des revendications 1, 2, 3 ou 4, caractérisé en ce qu'un premier intervalle temporel est respectivement disposé dans un premier intervalle de suppression de remplacement d'image du signal de télévision et un deuxième intervalle temporel est respectivement disposé dans un intervalle de suppression de remplacement d'image du signal de télévision suivant le premier.

6. Circuit selon l'une des revendications 1, 2, 3 ou 4, caractérisé en ce que des premier et deuxième intervalles temporels sont respectivement disposés ensemble dans un intervalle de suppression de remplacement d'image du signal de télévision.

7. Circuit selon l'une des revendications précédentes, caractérisé en ce que le signal couleur est modulé suivant la norme SECAM.

8. Circuit selon l'une des revendications 3 ou 4, selon les revendications 5 ou 6 associées aux revendications 3 ou 4 ou selon la revendication 7 associée à l'une des revendications 3 à 6, caractérisé en ce que les fréquences des oscillations de référence correspondent en grande partie aux fréquences des ondes porteuses et que des écarts dans les valeurs de fréquence qui entraînent des écarts dans les valeurs du signal de commande peuvent être compensées par des sources de signaux constants (84, 85).

9. Circuit selon la revendication 8 associée à la revendication 7, caractérisé en ce qu'un oscillateur à quartz réglé sur la double fréquence de l'oscillation porteuse couleur PAL sert de fréquence étalon (55, 56) et que la première oscillation de référence est dérivée de celle-ci par division en deux de la fréquence et la deuxième oscillation de référence par division de la fréquence par un rapport de 23:24 avec, ensuite, division de la fréquence en deux.
